# EUROPEAN PATENT APPLICATION

(11) **EP 2 854 134 A1**
(43) Date of publication of application: **01.04.2015**
(21) Application number: 14186094.0
(22) Date of filing: 24.09.2014
(51) Int. Cl.: G11B 20/00, G06F 17/00, G06F 7/00, G10L 15/12, G10L 15/10, G06T 3/00

(54) **A method and a system for determining a product vector for performing Dynamic Time Warping**

(30) Priority: 30.09.2013 IN KO11302013
(71) Applicant: Siemens Aktiengesellschaft, 80333 München (DE)
(72) Inventor: Gajjar, Mrugesh, 560048 Bangalore (IN); Vydyanathan, Nagavijayalaksh mi, 560034 Bangalore, Karnataka (IN)
(74) Representative: Isarpatent

(57) **Abstract**

The present invention relates to a method and a system (10) for determining a product vector (40_{1,1}-40_{m,n}) for computation of a Euclidean distance for performing Dynamic Time Warping (DTW) of a test signal (30₁-30ₙ) and a template signal (20₁-20ₘ). The present invention and the various embodiments thereof address the determination of low-rank factorized vectors (64,66) for the test signal (30₁-30ₙ). The low- rank factorized vectors (64,66) are then processed along with the template signal (20₁-20ₘ) for determining the product vector (40_{1,1}-40_{m,n}). The product vector (40_{1,1}-40_{m,n}) is thereafter usable for the determination of a Euclidean distance between the test signal (30₁-30ₙ) and the template signal (20₁-20ₘ), and for performing DTW of the test signal (30₁-30ₙ) and the template signal (20₁-20ₘ).

## Description

The present invention relates to the field of Dynamic Time Warping of signals, especially related to increasing the speed of performing Dynamic Time Warping, and particularly to a method and a system for determining a product vector for performing Dynamic Time Warping of signals.

Modern day signal processing applications, such as Dynamic Time Warping, Data Compression, Data Indexing, Image Processing, et cetera, involve tremendous amounts of data processing. The different signals involved therein are normally represented as matrices, which in turn comprise a vast multitude of vectors. The data processing involved thereof includes mathematical computations and mathematical transformations, such as matrix additions, matrix multiplications, matrix inversions, determination of Fast Fourier Transforms, et cetera. Signal processing applications that involve matrix multiplications and dot product computations, especially when the matrices are of immense dimensions and/or orders, can be both time consuming and resource intensive, because of the number of multiplicative and additive operations that are required to be performed for the determination of one or more intermediate results and/or the final result.

For example, in the domain of Dynamic Time Warping, one or more Euclidean distances need to be determined for two input signals, prior to the computation of a Dynamic Time Warping Score for the two input signals. The computation of the Euclidean distances in turn involves the determination of a product of the two input signals. Therefore, the speed of performing Dynamic Time Warping on the two input signals is dependent on the speed of determination of the product of the two signals. Therewith, the speed of performing Dynamic Time Warping can be enhanced by reducing the time required for the determination of the product of the two input signals.

Currently, the product of two matrices, wherein the matrices represent signals, is determined by direct multiplication of the matrices. However, the direct multiplication of the matrices is expensive in terms of both time and the resources required to determine the product thereof. Thus, the current technique poses impediments, especially for very high speed and highly data intensive applications, because latency is introduced in the determination of the final result.

Therefore, a need exists to increase the speed of determination of the product of the signals, therewith increasing the speed of the different mathematical computations involved therein, and the performance of the signal processing applications thereof. For example, in the context of Dynamic Time Warping, an increase in the speed of determination of the product of the two signals, also increases the speed of determination of the Euclidean distances associated therewith, and thereby leading to a reduction in the time required for performing Dynamic Time Warping.

It is an object of the present invention to provide an enhanced solution for increasing the speed of determination of the product of the two signals, especially in cases where the signals are represented as matrices.

The aforementioned object is achieved by a method for determining a product vector according to claim 1, and a system thereof according to claim 8.

The underlying object of the present invention is to simplify the determination of a product of two signals, viz. a test signal vector and a template signal, especially when the two signals are expressed as matrices. A simplified determination of the product of the two signals is beneficial in reducing the time and resources required, especially in time and resource intensive signal processing applications, such as performing Dynamic Time Warping of the two signals, in which the Euclidean Distance of the two signals is required to be determined based on the product of the two signals.

In the present invention, a method is proposed to determine a product vector of a test signal vector and a template signal vector. The test signal vector is a collection of vectorized values of a portion of a test signal. The template signal vector is a collection of vectorized values of a template signal. The test signal vector is factorized, whereby a first and a second test signal factorized vectors are obtained. Ranks of both the first and the second test signal factorized vectors are less than a rank of the test signal vector. The template signal vector is thereafter multiplied with the first test signal factorized vector, wherewith an intermediate template signal vector. The intermediate template signal vector is thereafter multiplied with the second test signal factorized vector, wherewith the product vector is obtained.

The low-rank factorization of the test signal vector simplifies the determination of the product of the test signal and the test signals, because the number of computations that are required to determine the product vector is reduced. Furthermore, the low-rank test signal factorized vectors consume lesser memory space for storage as compared to the complete test signal vector, because of the diminished ranks of the first and the second test signal factorized vectors as compared to the test signal vector.

In accordance with an embodiment of the present invention, a product of the first and the second test signal factorized vectors is an approximation of the test signal vector. Herewith, the memory requirements for storing the first and the second test signal factorized vectors are further reduced, because the storage of accurate vectorized values of the test signal vector mandates more memory space.

In accordance with yet another embodiment of the present invention, a random signal is multiplied with the test signal vector, and a quasi product vector is therewith obtained. The random signal is a collection of vectorized values of a random signal. The quasi product vector is factorized, wherewith a first and a second quasi product factorized vectors are obtained. Thereafter, the first quasi product factorized vector is multiplied with an inverse random signal, wherewith the first test signal factorized vector is obtained. In a further embodiment, the low-rank factorization of the quasi product vector is such that the second quasi product factorized vector is the second test signal factorized vector. Herewith, an alternate embodiment for the purpose of factorization of the test signal vector can be realized.

In accordance with another embodiment of the present invention, the test signal vector and/or the quasi product vector is factorized into low-rank factors by means of performing Singular Value Decomposition on the same. Singular Value Decomposition is a well-known method and follows a simple implementation of the same for the purpose of obtainment of the low-rank factors of the test signal.

A method for performing Dynamic Time Warping of the test signal vector and the template signal vector, based on the product vector obtained in accordance any of the aforementioned embodiments is herein disclosed. The product vector is processed along with the test signal vector and the template signal vector, wherewith a Euclidean distance between the test signal vector and the template signal vector is obtained. Thereafter, the Euclidean Distance is processed to obtain a global distance between the test signal vector and the template signal vector, wherewith a Dynamic Time Warping Score is obtained. The Dynamic Time Warping Score is a measure of the similarity between the test signal vector and the template signal vector.

A system disclosed herein, for the purpose of determination of the product vector of the test signal vector and the template signal vector, comprises a factorization module, a first multiplication module and a second multiplication module. The factorization module is operably coupled to the first multiplication module, and the first multiplication module is operably coupled to the second multiplication module. The test signal is factorized by the factorization module, wherewith the first and the second test signal factorized vectors are obtained. Thereafter, the first test signal factorized vector and the template signal vector are multiplied by the first multiplication module, wherewith the intermediate template signal vector. The intermediate template signal vector is thereafter multiplied with the second test signal factorized vector by the second multiplication module, wherewith the product vector is obtained.

In accordance with an embodiment of the present invention, the test signal vector is factorized by the factorization module such that the product of the first and the second template signal factorized vectors yield at least an approximation of the template signal vector.

In accordance with another embodiment of the present invention, the factorization of the template signal by the factorization module is accomplished by performing Singular Value Decomposition of the template signal vector.

In accordance with yet another embodiment of the present invention, a third multiplication module is provided therein. The multiplication of the random signal and the test signal vector is facilitated by the third multiplication module for the purpose of obtainment of the quasi product vector.

In accordance with yet another embodiment of the present invention, the quasi product vector is factorized by the factorization module, therewith obtaining the first and the second quasi product factorized vectors. The factorization is such that the second quasi product factorized vector is the second template signal factorized vector.

In accordance with yet another embodiment of the present invention, a fourth multiplication module is provided therein. The multiplication of the inverse random signal and the first quasi product factorized vector is facilitated by the fourth multiplication module.

In accordance with yet another embodiment of the present invention, the first multiplication module is configured to perform the multiplication of the first test signal factorized vector and the second quasi product factorized vector. Therewith, the product vector is obtained.

In accordance with yet another embodiment of the present invention, a memory unit is provided therein. The memory unit is beneficial for storing the test signal vector, the template signal vector, the product vector, the first test signal factorized vector, and/or the second test signal factorized vector.

A Dynamic Time Warping Block for performing Dynamic Time Warping of the test signal vector and the template signal vector is disclosed herein. The Dynamic Time Warping Block comprises the system according to any of the aforementioned embodiments, a Euclidean Distance Matrix Computation module, and a Dynamic Time Warping Score computation module. The Euclidean distance between the test signal vector and the template signal vector is computed by the Euclidean Distance Computation module. The Euclidean distance is provided to the Dynamic Time Warping Score computation module, wherewith the Euclidean Distance is processed and the global distance between the test signal vector and the template signal vector is determined. The global distance represents the Dynamic Time Warping Score for the test signal vector and the template signal vector. The Dynamic Time Warping Score represents a similarity between the test signal vector and the template signal vector.

The aforementioned and other embodiments of the present invention related to a method and a system for determining a product vector for performing Dynamic Time Warping will now be addressed with reference to the accompanying drawings of the present invention. The illustrated embodiments are intended to illustrate, but not to limit the invention. The accompanying drawings herewith contain the following figures, in which like numbers refer to like parts, throughout the description and drawings.

The figures illustrate in a schematic manner further examples of the embodiments of the invention, in which:
- FIG 1: depicts an overview of a system for determining a product vector of a test signal vector and a template signal vector according to one or more embodiments of the present invention,
- FIG 2: depicts an exemplary embodiment of the system referred to in FIG 1,
- FIG 3: depicts another embodiment of the system referred to in FIG 1,
- FIG 4: depicts a Dynamic Time Warping Block comprising the system referred to in FIG 1 for determining a Dynamic Time Warping Score of the test signal vector and the template signal vector,
- FIG 5: depicts a flowchart of a method for determining the product vector referred to in FIG 1,
- FIG 6: depicts certain steps of the method referred to in FIG 5 with reference to another embodiment of the present invention,
- FIG 7: depicts a flowchart of a method for performing Dynamic Time Warping of the test signal vector and the template signal vector referred to in FIG 1.

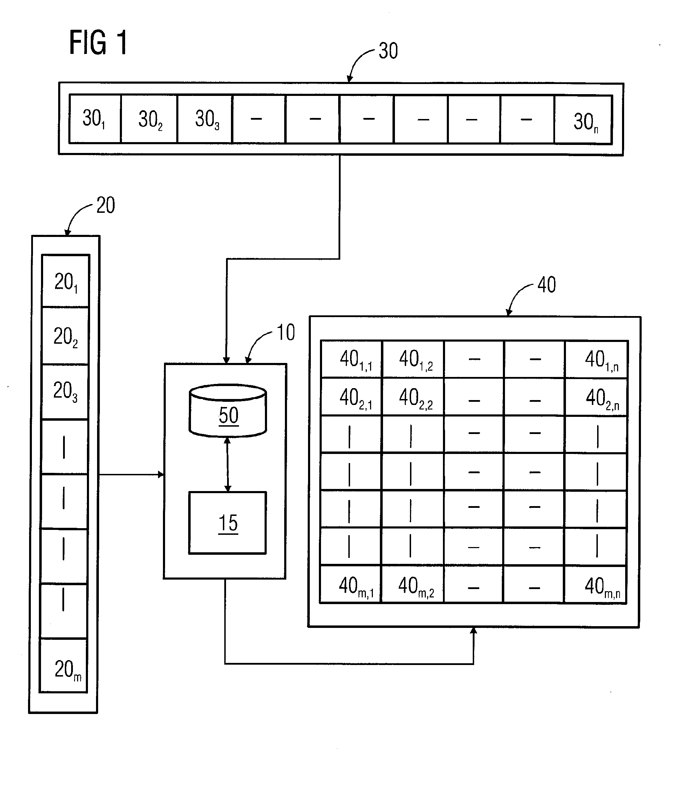

An overview of a system 10 for determining a product vector 40_{1,1} from a test signal vector 30₁ and a template signal vector 20₁ in accordance with one or more embodiments of the present invention is depicted in FIG 1.

A plurality of test signal vectors ('n' number of exemplary test signal vectors 30₁-30ₙ) 30 is depicted in FIG 1. It may be noted herein that each test signal vector 30₁-30ₙ comprises vectorized values of at least a portion of a test signal (not shown), i.e. the vectorized values of the test signal vector 30₁-30ₙ can correspond to respective discrete-time sampled values of the portion of the test signal. Herein, the test signal can correspond to a discrete-time signal, such as a discrete-time speech signal, a discrete-time video signal, a discrete-time image signal, a discrete-time temperature signal, et cetera.

An exemplary manner of obtainment of the aforementioned 'n' number of exemplary test signal vectors 30₁-30ₙ is elucidated herein. The aforementioned test signal can be windowed in time domain, wherein a certain time domain window of the test signal corresponds to the aforementioned portion of the test signal, and thereafter the respective discrete-time sampled values that correspond to the portion of the test signal can be arranged accordingly to obtain the corresponding test signal vector 30₁-30ₙ. Thus, it may be noted herein that sequentially arranged test signal vectors 30₁-30ₙ correspond to respective vectorized values of sequential portions of the test signal, i.e. respective collections of sequential discrete-time sampled values of sequential time-domain windowed portions of the discrete-time test signal.

Furthermore, it may be noted herein that if a number of discrete-time sampled values in each of the time domain windows is 'd', then a length of each test signal vector 20₁-20ₘ is construed to be 'd'. Therefore, each test signal vector 20₁-20ₘ is representable as a '1 X d' matrix, i.e. '1' row, and 'd' number of columns. Herein, each column is construed to represent respective vectorized values of the respective portions of the test signal.

Herein, for the purpose of visualization, the plurality of 'n' number of test signal vectors 30 as depicted in FIG 1 are arranged in the form of an 'd X n' dimensional matrix, i.e. 'd' number of rows, and 'n' number of columns. Herein, each column represents a particular test signal vector 30₁-30ₙ, and each row represents a contiguous collection the corresponding vectorized values of respective test signal vectors 30₁-30ₙ.

Hereinafter, the plurality of test signal vectors 30 which is arranged in the form of an 'd X n' dimensional matrix will be referred to as "the 'd X n' test signal matrix 30".

Herein, if 'n' is greater than 'd', then a rank of the 'd X n' test signal matrix 30 cannot exceed 'd'. Similarly, if 'n' is lesser than 'd', then the rank of the 'd X n' test signal matrix 30 cannot exceed 'n'. Preferably, 'n' is greater than 'd'.

A plurality of template signal vectors ('m' number of exemplary template signal vectors 20₁-20ₘ) 20 is depicted in FIG 1. It may be noted herein that each template signal vector 20₁-20ₘ comprises vectorized values of at least a portion of a template signal (not shown). The vectorized values of the portion of a template signal refer to the respective discrete-time values of the portion of the template signal.

It may be noted herein that the template signal vectors 20₁-20ₘ serve as model signals for the purpose of comparison of the test signal vector 30₁-30ₙ with one or more template signal vectors 20₁-20ₘ for the purpose of determination of respective degrees of similarity between the test signal vector 30₁-30ₙ and the respective template signal vectors 20₁-20ₘ. The template signal vector 20₁-20ₘ that is approximately similar to the test signal vector 30₁-30ₙ can be thereafter selected. This is useful for performing certain signal processing applications such as Dynamic Time Warping, Data Compression, Data Indexing, et cetera.

Furthermore, it is construed that a length of each template signal vector 20₁-20ₘ is also 'd', i.e. 'd' number of samples is comprised in each of the template signal vector 30₁-30ₙ. However, herein each template signal vector 30₁-30ₙ is representable as a 'd X 1' matrix, i.e. 'd' number of rows, and '1' column. Herein, each row is construed to represent the respective vectorized values of the respective portion of the template signal

Herein, for the purpose of visualization, and for the purpose of facilitation of the processing of a particular template signal vector 20₁-20ₘ and the plurality of test signal vectors 30₁-30ₙ, the plurality of template signal vectors 20 is arranged in a columnar manner, which is representable in the form of a 'm X d' dimensional matrix, i.e. 'm' number of rows and 'd' number of columns. The columnar arrangement of the template signal vectors 20₁-20ₘ as the 'm X d' matrix is beneficial for matrix multiplication of the 'm X d' template signal vectors 20₁-20ₘ and the 'd X n' test signal matrix 30.

Hereinafter, the plurality of 'm' number of 'd X 1' template signal vectors 20₁-20ₘ which is arranged in the form of an 'm X d' dimensional matrix will be referred to as "the 'm X d' template signal matrix 20".

A plurality of product vectors ('m X n' number of exemplary product vectors 40_{1,1}-40_{m,n}) 40 is depicted in FIG 1. Herein an exemplary product vector 40_{1,1}-40_{m,n} is to be construed as a vector-based dot product of an exemplary template signal vector 20₁-20ₘ and an exemplary test signal vector 30₁-30ₙ. It may be noted herein that a respective product vector 40_{1,1}-40_{m,n} is determined as a dot product of a respective template signal vector 20₁-20ₘ and a respective test signal vector 30₁-30ₙ. The plurality of product vectors 40_{1,1}-40_{m,n} is construed to be an ordered arrangement of the corresponding dot products of the respective plurality of template signal vectors 20 and the respective plurality of test signal vectors 30. Therefore, 'm X n' number of product vectors 40_{1,1}-40_{m,n} can be determined, because of the presence of 'm' number of template signal vectors 20₁-20ₘ and 'n' number of test signal vectors 30₁-30ₙ.

It may be noted herein that the length 'd' of the aforementioned exemplary template signal vector 20₁-20ₘ and the length 'd' of the aforementioned exemplary test signal vector 30₁-30ₙ are identical, for the purpose of determination of the dot product of the template signal vector 20₁-20ₘ and the test signal vector 30₁-30ₙ. Therewith, an entire length of the aforementioned exemplary product vector (i.e. the corresponding dot products of the respective exemplary template signal vectors 20₁-20ₘ and the respective exemplary test signal vectors 30₁-30ₙ) 40_{1,1}-40_{m,n} is also 'm X n'.

Herein, for the purpose of visualization, the plurality of product vectors 40_{1,1}-40_{m,n} is arranged in the form of an 'm X n' dimensional matrix, i.e. 'm' number of rows and 'n' number of columns.

Hereinafter, the plurality of product vectors 40_{1,1}-40_{m,n} which is arranged in the form of an 'm X n' dimensional matrix will be referred to as "the 'm X n' product vector matrix 40".

Herein, if 'm' is greater than 'n', then a rank of the 'm X n' product vector matrix 40 cannot exceed 'n'. Similarly, if 'm' is lesser than 'n', then the rank of 'm X n' product vector matrix 40 cannot exceed 'm'.
In the subsequent paragraphs, it may be noted herein that the present invention will be elucidated specifically with respect to an exemplary template signal vector 20₁-20ₘ and the 'd X n' test signal matrix 30 (i.e. the plurality of test signal vectors 30₁-30ₙ) 30 for the purpose of determination of an exemplary product vector 40_{1,1}-40_{m,n}. However, without loss of generality, it may be noted herein that the teachings of the present invention can be utilized and extended thereon to determine the product vectors 40_{1,1}-40_{m,n} corresponding to the remaining template signal vectors 20₁-20ₘ, should there be a scenario, which is usually the case in practical signal processing applications, such as Dynamic Time Warping, wherein a multitude of test signal vectors is present.

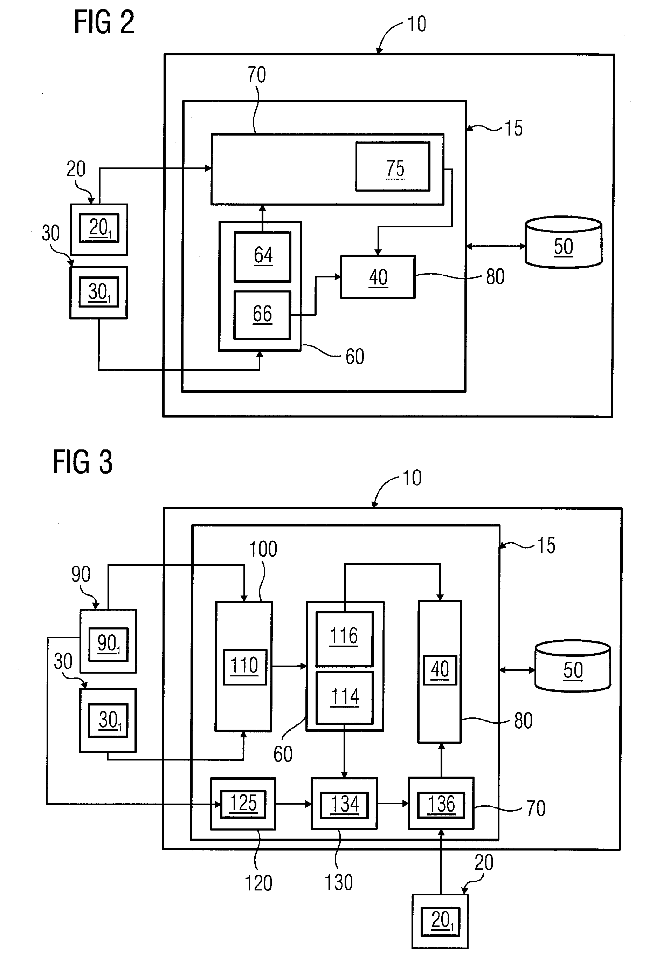

The system 10 of FIG 1, along with the various embodiments thereof, is configured to receive each of the template signal vectors 20₁-20ₘ and the 'd X n' test signal matrix 30, and process the same for the determination of the respective product vectors 40_{1,1}-40_{m,n} thereof. The processing of the template signal vectors 20₁-20ₘ and the 'd X n' test signal matrix 30 involves the determination of the dot products thereof. FIG 1 is only a high level depiction of the system 10, and the various embodiments thereof are elucidated with reference to FIG 2 and FIG 3.

It may be noted herein that the system 10 comprises a processing unit 15 to receive the template signal vector 20₁-20ₘ and the plurality of test signal vectors 30 and to process the same to determine the respective product vector 40_{1,1}-40_{m,n} thereof. The various components (which will be elucidated in the subsequent paragraphs) of the processing unit 15 can be implemented using one or more hardware modules, software modules, or combinations thereof. For example, if the system 10 is implemented using a hardware unit, then the processing unit 15 may be realised by means of a processor of a General Purpose Computer, an Application Specific Integrated Circuit, a Field Programmable Gate Array Device, a Complex Programmable Logic Device, et cetera.

In accordance with an embodiment of the present system 10, a memory unit 50 is provided thereunto, and the memory unit 50 is operably coupled to the processing unit 15 for enabling data transfer between the processing unit 15 and the memory unit 50. The memory unit 50 facilitates the storage of one or more template signal vectors 20₁-20ₘ, one or more test signal vectors 30₁-30ₙ, and/or one or more product vectors 40_{1,1}-40_{m,n}, et cetera. The memory unit 50 is preferably realizable as a database capable of being queried for obtaining data therefrom, whereby the template signal vectors 20₁-20ₘ and/or the test signal vectors 30₁-30ₙ can be provided to the processing unit 15 for the determination of the corresponding product vectors 40_{1,1}-40_{m,n}. The coupling between the processing unit 15 and the memory unit 50 can be wired, wireless, or a combination thereof. Furthermore, according to an aspect of the present invention, the memory unit 50 can be internal to the processing unit 15 and the entire system 10 can be the processing unit 15 comprising the memory unit 50 itself - for example the memory unit 50 can be an internal cache memory of the processing unit 15. Alternatively, according to another aspect of the present invention, the memory unit 50 can also be located external to the processing unit 15 - for example the memory unit 50 can be remotely located as compared to the processing unit 15.

Herein, the aforementioned matrix-arrangements 20,30,40 - which can correspond to the plurality of template signal vectors 20, the plurality of test signal vectors 30, and/or the plurality of product vectors 40 - are depicted for illustrative purposes. The actual manner in which the aforementioned matrix-arrangements 20,30,40 are stored in the memory unit 50 and/or processed by the processing unit 15 of the system 10 depends on the architecture of the system 10 and/or the architecture of the memory unit 50.

In the subsequent paragraphs, two exemplary embodiments of the system 10 are elucidated. The exemplary embodiments of the system 10 are utilised for the determination of the product vector 40_{1,1}-40_{m,n} by processing each of the template signal vectors 20₁-20ₘ and the 'd X n' test signal matrix 30. A first exemplary embodiment is elucidated with reference to FIG 2 and a second exemplary embodiment is elucidated with reference to FIG 3.

The system 10 in accordance with the first exemplary embodiment of the present invention is depicted in FIG 2.

FIG 1 is also referred to herein for the purpose of elucidation of FIG 2. The system 10 comprises a factorization module 60, a first multiplication module 70 and a second multiplication module 80, for the determination of the product vector 40_{1,1}-40_{m,n}. Herein, it may be noted that the factorization module 60, the first multiplication module 70 and the second multiplication module 80 can be realized as hardware modules, software modules, or combinations thereof. The functioning of the aforementioned modules 60,70,80 is elucidated in the subsequent paragraphs.

In accordance with one or more aspects of the first exemplary embodiment of the invention, the factorization module 60 is configured to receive the 'd X n' test signal matrix 30, in order to factorize the 'd X n' test signal matrix 30, viz. into a first test signal factorized vector 64 and a second test signal factorized vector 66. Herein, to achieve the purpose of faster and more efficient computation of the product vector 40_{1,1}-40_{m,n}, 'd X n' test signal matrix 30 is factorized by the factorization module 60 in a manner such that respective ranks of the first and second test signal factorized vectors 64,66 are both lower than a rank of the 'd X n' test signal matrix 30. This aspect is termed as low-rank factorization of the 'd X n' test signal matrix 30.

It may be observed herein that according to one aspect of the aforementioned low-rank factorization, one or more individual dimensions of both the first test signal factorized vector 64 and dimensions of the second test signal factorized vector 64 are reduced as compared to dimensions of the 'd X n' test signal matrix 30. For example, the 'd X n' test signal matrix 30 can be factorized into a 'd X d-k' dimensional first test signal factorized vector 64 and a 'd-k X n' dimensional second test signal factorized vector 66. Herein 'k' is preferably less than both 'd' and 'n', and it may be therewith observed that d-k < d < n.

Hereinafter, "the 'd X d-k' dimensional first test signal factorized vector 64" will be referred to as "the 'd X d-k' first test matrix 64", and "the 'd-k X n' dimensional second test signal factorized vector 66" will be referred to as "the 'd-k X n' second test matrix 66".

Since 'd-k' is less than 'd', it may be noted herein that the rank of 'd X d-k' first test matrix 64 cannot exceed 'd-k'. Similarly, since 'd-k' is also less than 'n', it may be noted herein that the rank of 'd-k X n' second test matrix 66 cannot exceed 'd-k', and the same is again less than 'd'. Therefore, the 'd X d-k' first test matrix 66 and the 'd-k X n' second test matrix 66 are both low-rank factors of the 'd X n' test signal matrix 30.

Herein, according to an aspect of the present invention, the 'd X d-k' first test matrix 64 and the 'd-k X n' second test matrix 66 are factors such that, if the 'd X d-k' first test matrix 64 and the 'd-k X n' second test matrix 66 were to be synthesized, then at least an approximation of the 'd X n' test signal matrix 30 is obtained, and the degree of approximation can be for example 80% of the 'd X n' test signal matrix 30. This aspect is beneficial in reducing the memory space required for the storage of 'd X n' test signal matrix 30, because only 'd X d-k' first test matrix 64 and the 'd-k X n' second test matrix 66 are required to be stored, which consume lesser memory space as compared to storing the accurate values of the test vectors 30₁-30ₙ comprised in the 'd X n' test signal matrix 30.

Therewith, it is possible to factorize the 'd X n' test signal matrix 30 into a lower rank 'd X d-k' first test matrix 64 and a lower rank 'd-k X n' second test matrix 66. The aforementioned factorization of the 'd X n' test signal matrix 30 into two matrices 64,66 of lower ranks as compared to the rank of 'd X n' test signal matrix 30 can be achieved using well-known low-rank matrix approximation techniques. Certain well-known low-rank approximation techniques include Singular Value Decomposition, Principal Component Analysis, Factor Analysis, Total Least Squares Method, et cetera. Singular Value Decomposition simplifies the task of factorizing the 'd X n' test signal matrix 30 into the aforementioned low-rank factors 64,66, and the same is preferably used for low-rank factorization of the 'd X n' test signal matrix 30 in accordance with an embodiment of the present invention. The aforementioned low-rank approximation techniques are well-known in the art and the same are not elucidated in detail herein for the purpose of brevity.

To summarize, the functioning of the factorization module 60 is such that the factorization module 60 receives any matrix as an input and provides at least two lower rank factors of the input matrix. Additionally, the lower rank factors that are therewith obtained are such that the lower rank factors upon synthesis result in at least an approximation of the input matrix.

The first multiplication module 70 of the system is herein operably coupled to the factorization module 60, thereby enabling data transfer between the factorization module 60 and the first multiplication module 70. Herein, the first multiplication module 70 is configured to receive the aforementioned 'd X d-k' first test matrix 64 , and the '1 X d' exemplary template signal vector 20₁-20ₘ. Furthermore, the first multiplication module 70 is configured to multiply the '1 X d' exemplary template signal vector 20₁-20ₘ and the 'd X d-k' first test matrix 64, whereby an intermediate template signal vector 75 is obtained. Dimensions of the intermediate template signal vector 75 obtained therewith is '1 X d-k', i.e. the intermediate template signal vector 75 comprises '1' row and 'd-k' number of columns.

Hereinafter, the intermediate template signal vector 75 comprising '1' row and 'd-k' number of columns will be referred to as '1 X d-k' intermediate vector 75.

The second multiplication module 80 is operably coupled to the first multiplication module 70, thereby enabling data transfer between the second multiplication module 80 and the first multiplication module 70. Herein, the second multiplication module 80 is configured to receive the aforementioned '1 X d-k' intermediate vector 75 and the 'd-k X n' second test matrix 66. Furthermore, the second multiplication module 80 is configured to multiply the '1 X d-k' intermediate vector 75 and the 'd-k X n' second test matrix 66, wherewith a single row, for example the product vectors 40_{1,1}-40_{1,n}, of the aforementioned 'm X n' product vector matrix 40 is obtained. It may be noted herein that dimensions of the aforementioned single row 40_{1,1}-40_{1,n} of the 'm X n' product vector matrix 40 is '1 X n'.

It may be noted herein that subsequent rows 40_{2,1}-40_{2,n} to 40_{m,1}-40_{m,n} of the 'm X n' product vector matrix 40 can be obtained by providing subsequent template signal vectors 20₁-20ₘ to the first multiplication module 70. Each of these template signal vectors 20₁-20ₘ is thereafter respectively multiplied with the 'd X d-k' first test matrix 64, wherewith respective subsequent '1 X d-k' intermediate vectors 75 are obtained. The respective subsequent '1 X d-k' intermediate vectors 75 are thereafter provided to the second multiplication module 80, wherein the respective '1 X d-k' intermediate vectors 75 are multiplied with the 'd-k X n' second test matrix 66, wherewith the respective subsequent rows 40_{2,1}-40_{2,n} of the 'm X n' product vector matrix 40 are obtained.

Furthermore, the memory unit 50 can be configured to store the 'd X d-k' first test matrix 64, the '1 X d-k' intermediate vector 75, and/or the 'd-k X n' second test matrix 66. The operable coupling of the memory unit 50 with the processing unit 15 enables data transfer between the memory unit 50 and the processing unit 15. Furthermore, the 'd X d-k' first test matrix 64 and the 'd-k X n' second test matrix 66 can be fetched by the processing unit 15 from the memory unit 50 for processing the same and for additional purposes such as the determination of the 'm X n' product vector matrix 40. Herein, according to another aspect of the present invention, the memory unit 50 can be configured to provide the 'd X d-k' first test matrix 64 to the first multiplication module 70 for the purpose of computation of the '1 X d-k' intermediate vector 75. Similarly, the memory unit 50 can be configured to provide the '1 X d-k' intermediate vector 75 and the 'd-k X n' second test matrix 66 for the purpose of determination of the 'm X n' product vector matrix 40.

The system 10 in accordance with the second exemplary embodiment of the present invention is depicted in FIG 3.

The preceding figures are also referred to herein for the purpose of elucidation of FIG 3. The second embodiment elucidates an alternate implementation of the system 10 for obtaining the aforementioned 'm X n' product vector matrix 40. According to the second exemplary embodiment, the processing unit 15 comprises a third multiplication module 100. The third multiplication module 100 is configured to receive a random signal 90 and the 'd X n' test signal matrix 30, and to multiply the random signal 90 and the 'd X n' test signal matrix 30.

Herein, the random signal 90 is a plurality of 'p' number of '1 X d' dimensional random row vectors (not shown). The 'p' number of '1 X d' dimensional random row vectors are arranged in a row-wise manner, thereby resulting in a 'p X d' matrix. Preferably, 'p' is equal to 'd', thereby resulting in a square matrix.

According to an alternate aspect of the present invention, the random signal 90 can also comprise a multitude of randomly selected template signal vectors 30₁-30ₙ from the plurality of template signal vectors 30₁-30ₙ.

Hereinafter, the 'p' number of '1 X d' dimensional random row vectors will be referred to as 'p X d' random signal matrix 90.

It may be noted herein that, if 'p' is greater than 'd', then a rank of the 'p X d' random signal matrix 90 cannot exceed 'd'. Similarly, if 'p' is lesser than 'd', then the rank of the 'p X d' random signal matrix 90 cannot exceed 'p'.

By the multiplication of the 'p X d' random signal matrix 90 and the 'd X n' test signal matrix 30, a quasi product vector 110 is obtained. The quasi product vector 110 is represented as a 'p X n' dimensioned matrix, and will be hereinafter referred to as 'p X n' quasi product matrix 110. The 'p X n' quasi product matrix 110 is an intermediate matrix that will be beneficial in the determination of the 'm X n' product vector matrix 40.

It may be noted herein that, if 'p' is greater than 'n', then a rank of the 'p X n' quasi product matrix 110 cannot exceed 'n'. Similarly, if 'p' is lesser than 'n', then the rank of the 'p X n' quasi product matrix 110 cannot exceed 'p'.

In accordance with this embodiment of the present invention, the factorization module 60 is configured to receive the 'p X n' quasi product matrix 110, and to factorize the 'p X n' quasi product matrix 110 to obtain low-rank factors of the 'p X n' quasi product matrix 110. The 'p X n' quasi product matrix 110 is factorized to obtain at least two low-rank factors of the same, viz. a first quasi product factorized vector 114 and a second quasi product factorized vector 116.

Low-rank factorization of the 'p X n' quasi product matrix 110 is achieved by performing any of the aforementioned low-rank factorization techniques on the 'p X n' quasi product matrix 110, for example, by performing Singular Value Decomposition of the 'p X n' quasi product matrix 110.

It may be observed herein that according to one aspect of the aforementioned low-rank factorization, one or more individual dimensions of both the first quasi product factorized vector 114 and dimensions of the second quasi product factorized vector 116 are reduced as compared to dimensions of the 'p X n' quasi product matrix 110. For example, the 'p X n' quasi product matrix 110 can be factorized into a 'p X p-k' dimensional first quasi product factorized vector 114 and a 'p-k X n' dimensional second quasi product factorized vector 116. Herein 'k' is preferably less than both 'p' and 'n'.

Hereinafter, "the 'p X p-k' dimensional first quasi product factorized vector 114" will be referred to as "the 'p X p-k' first quasi matrix 114", and "the 'p-k X n' dimensional second quasi product factorized vector 116" will be referred to as "the 'p-k X n' second quasi matrix 116".

It may be noted herein that the rank of 'p X p-k' first quasi matrix 114 cannot exceed 'p-k', and the same is less than 'p'. Similarly, the rank of 'p-k X n' second quasi matrix 116 cannot exceed 'p-k', which is again less than 'p'. Therefore, the 'p X p-k' first quasi matrix 114 and the 'p-k X n' second quasi matrix 116 are both low-rank factors of the 'p X n' quasi product matrix 114.

Herein, according to an aspect of the present invention, the 'p X p-k' first quasi matrix 114 and the 'p-k X n' second quasi matrix 116 are factors such that, if the 'p X p-k' first quasi matrix 114 and the 'p-k X n' second quasi matrix 116 were to be synthesized, then at least an approximation of the 'p X n' quasi product matrix 110 is obtained, and the degree of approximation can be for example 80% of the 'p X n' quasi product matrix 110. This aspect is beneficial in reducing the memory space required for the storage of 'p X n' quasi product matrix 110, because only 'p X p-k' first quasi matrix 114 and the 'p-k X n' second quasi matrix 116 are required to be stored, which consume lesser memory space as compared to storing the 'p X n' quasi product matrix 110.

An inversion module 120 comprised in the system 10 is configured to receive the 'p X d' random signal matrix 90 for the purpose of inverting the 'p X d' random signal matrix 90. An inverse random signal matrix 125 is therewith obtained wherein the inverse random signal matrix 125 comprises 'd' number of rows and 'p' number of columns.

Hereinafter the inverse random signal matrix 125 will be referred to as 'd X p' inverse matrix 125. It may be observed herein that the 'd X p' inverse matrix 125 can also be a pseudo-inverse of 'p X d' random signal matrix 90, if 'p' and 'd' are unequal.

A fourth multiplication module 130 comprised in the system is configured to receive the 'd X p' inverse matrix 125 and the 'p X p-k' first quasi matrix 114, and configured to multiply the 'd X p' inverse matrix 125 and the 'p X p-k' first quasi matrix 114. By the multiplication of the 'd X p' inverse matrix and the 'p X p-k' first quasi matrix, a first intermediate quasi matrix 134 is obtained. The first intermediate quasi matrix 134 comprises 'd' number rows and 'p-k' number of columns.

Hereinafter, the first intermediate quasi matrix 134 comprising 'd' number rows and 'p-k' number of columns will be referred to as 'd X p-k' first intermediate quasi matrix 134.

The 'd X p-k' first intermediate quasi matrix 134 can also be the 'd X d-k' first test matrix 64, if the multiplication of the 'd X p' inverse matrix 125 and the 'p X p-k' first quasi matrix 114 were to annul the effect of the multiplication of the 'p X d' random signal matrix 125 and the 'd X n' test signal matrix 30, and the subsequent factorization of the 'p X n' quasi product matrix 110 into the 'p X p-k' first quasi matrix 114 and the 'p-k X n' second quasi matrix 116.

In accordance with the present embodiment, the first multiplication module 70 is herein configured to receive the exemplary 'm X d' template signal matrix 20 and the 'd X p-k' first intermediate quasi matrix 134, and also configured to multiply the 'm X d' template signal matrix 20 and the 'd X p-k' first intermediate quasi matrix 134. By the multiplication of the 'm X d' template signal matrix 20 and the 'd X p-k' first intermediate quasi matrix 134, a second intermediate quasi matrix 136 is therewith obtained. The second intermediate quasi matrix 136 comprises 'm' number of rows and 'p-k' number of columns.

Hereinafter, the second intermediate quasi matrix 136 comprising 'm' number of rows and 'p-k' number of columns will be referred to as 'm X p-k' second intermediate quasi matrix 136.

In furtherance to the aforementioned, in accordance with the present embodiment, the second multiplication module 80 is configured to receive the 'm X p-k' second intermediate quasi matrix 136 and the 'p-k X n' second quasi matrix 116, and also configured to multiply the 'm X p-k' second intermediate quasi matrix 136 and the 'p-k X n' second quasi matrix 116. By the multiplication of the 'm X p-k' second intermediate quasi matrix 136 and the 'p-k X n' second quasi matrix 116, the 'm X n' product vector matrix 40 is therewith obtained. The 'm X n' product vector matrix 40 can be stored in the memory unit 50 and retrieved later, for example for further processing of the 'm X n' product vector matrix 40 for any signal processing application.

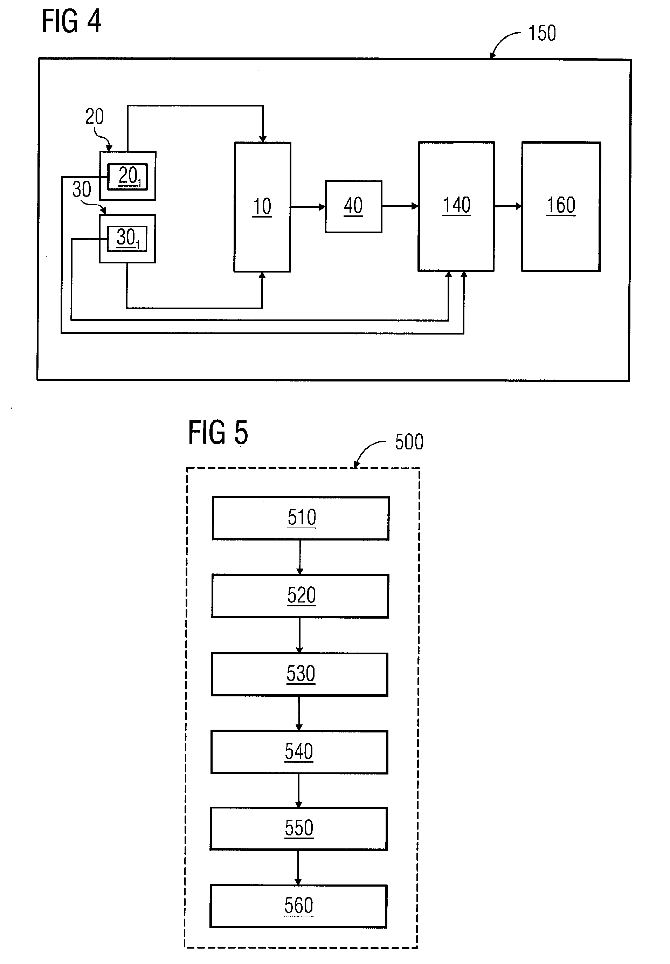

The 'm X n' product vector matrix 40 determined in accordance with the aforementioned paragraphs is beneficial in the determination of respective Euclidean Distances between the respective 'm' number of plurality of test signal vectors 20 and the respective 'n' number of plurality of template signal vectors 30. Thereafter, the Euclidean Distances can be used for performing Dynamic Time Warping of the test signal vector 30₁-30ₙ with the plurality of 'm' number of template signal vectors 20. These aspects are elucidated with reference to FIG 4 for exemplary and illustrative purposes.

Herein, the system 10 comprising the factorization module 60, the first multiplication module 70 and the second multiplication module 80 can be realised as a single hardware unit, wherein different entities of the hardware unit are configured to perform the functions of the factorization module 60, the first multiplication module 70 and the second multiplication module 80. For example, the system 10 depicted in FIG 2 can be realised on a Field Programmable Gate Array Device which comprises a plurality of Configurable Logic Blocks. A first set of the Configurable Logic Blocks can be configured to perform one or more functions associated with the factorization module 60, and a second set of the Configurable Logic Blocks can be configured to perform one or more functions associated with the first multiplication module 70, and a third set of the Configurable Logic Blocks can be configured to perform one or more functions associated with the second multiplication module 80, et cetera.

A Dynamic Time Warping Block 150 comprising the system 10 in accordance with any of the aforementioned embodiments is depicted in FIG 4.

One or more of the preceding figures are also referred to herein for the purpose of elucidation of the Dynamic Time Warping Block 150 depicted in FIG 4. The Dynamic Time Warping Block 150 is beneficial for determining a similarity between one or more of the plurality of the test signal vectors 30 and the plurality of template signal vectors 20. The Dynamic Time Warping Block 150 comprises the system 10 in accordance with any of the aforementioned embodiments, a Euclidean Distance Matrix Computation module 140 and a Dynamic Time Warping Score computation module 160. In FIG 1, the system 10 is depicted to be located internal to the Dynamic Time Warping Block 150. However, according to an alternate aspect, and without loss of any generality, the system 10 may be also located external to the Dynamic Time Warping Block 150.

The Euclidean Distance Matrix Computation module 140 is configured to receive the 'm X n' product vector matrix 40, the 'm X d' template signal matrix 20, and the 'd X n' test signal matrix 30 as inputs. Herein, the Euclidean Distance Matrix Computation module 140 is configured to determine an 'm X n' Euclidean Distance Matrix (not depicted), which comprises a plurality of Euclidean Distances (not depicted). Each Euclidean Distance thereby determined signifies a respective distance between a certain test signal vector (comprised in the 'd Xn' test signal matrix 30) 30₁-30ₙ and a certain template signal vector (comprised in the 'm X d' template signal matrix 20) 20₁-20ₘ. The collection of such respective Euclidean Distances between each of the respective test signals 30₁-30ₙ and each of the respective template signals 20₁-20ₘ constitutes the 'm X n' Euclidean Distance Matrix, which is the output provided by the 'm X n' Euclidean Distance Matrix Computation module. The determination of the 'm X n' Euclidean Distance Matrix based upon the provision of the 'm X d' template signal matrix 20, the 'd X n' test signal matrix 30, and the 'm X n' product vector matrix 40 and the implementation of the Euclidean Distance Matrix Computation module 140 are well-known in the art, and is not elucidated herein for the purpose of brevity.

Thereafter the 'm X n' Euclidean Distance Matrix is provided to the Dynamic Time Warping Score computation module 160 for performing Dynamic Time Warping of the plurality of test signals 30 and the plurality of template signals 20. Herewith, an 'm X n' Global Distance Matrix (not depicted) is determined for the test signals 30₁-30ₙ represented in the 'd X n' test signal matrix 30 and for the template signals 20₁-20ₘ comprised in the 'm X d' template signal matrix 20, and thereby a Dynamic Time Warping Score purporting to the similarity of a certain test signal 30₁-30ₙ with any of the template signals 20₁-20ₘ is determinable. The determination of the Dynamic Time Warping Score, i.e. the determination of the 'm X n' Global Distance Matrix, by the performance of Dynamic Time Warping of the plurality of test signals 30 and the plurality of template signals 20 based on the aforementioned 'm X n' Euclidean Distance Matrix is well-known in the art and is not elucidated herein for the purpose of brevity.

A flowchart 500 of an overview of a method for determining the product vectors 40_{1,1}-40_{m,n} from the test signal vectors 30₁-30ₙ and the template signal vector 20₁-20ₘ in accordance with one or more embodiments of the present invention is depicted in FIG 5.

Reference is made to one or more of the preceding Figures for the purpose of elucidation of the aforementioned flowchart 500.

In steps 510 and 520, the test signal vector 30₁-30ₙ and the template signal vector 20₁-20ₘ are received respectively. Herein, the test signal vector 30₁-30ₙ and the template signal vector 20₁-20ₘ are represented as 'd X n' test signal matrix 30 and 'm X d' test signal matrix 20 respectively. According to one aspect, the 'm X d' template signal matrix 20 and 'd X n' test signal matrix 30 can be stored in the memory unit 50, and the memory unit 50 can thereafter be queried by the processing unit 15 to receive the 'm X d' template signal matrix 20 and 'd X n' test signal matrix 30.

In step 530, the 'd X n' test signal matrix 30 is factorized into the aforementioned 'd X d-k' first test matrix 64, and the 'd-k X n' second test matrix 66, which are low-rank factors of the 'd X n' test signal matrix 30. In accordance with an embodiment of the present method, the low-rank factors, viz. 'd X d-k' first test matrix 64 and the 'd-k X n' second test matrix 66, are obtained by performing Singular Value Decomposition of the 'd X n' test signal matrix 30. The step 530 can be performed by providing the 'd X n' test signal matrix 30 to the factorization module 60 for the purpose of low-rank factorization of the 'd X n' test signal matrix 30. For example, the low-rank factorization of the 'd X n' test signal matrix 30 can be achieved by performing Singular Value Decomposition on the 'd X n' test signal matrix 30.

In step 540, the '1 X d' exemplary template signal vector 20₁ and the 'd X d-k' first test matrix 64 are multiplied, wherewith the intermediate template signal vector 75 is obtained. The step 540 can be performed by providing the '1 X d' exemplary template signal vector 20₁ and the 'd X d-k' first test matrix 64 to the first multiplication module 70 for the purpose of multiplication of the '1 X d' exemplary template signal vector 20₁ and the 'd X d-k' first test matrix 64.

In step 550, the '1 X d-k' intermediate vector 75 and the 'd-k X n' second test matrix 66 are multiplied, wherewith the single row (of dimensions '1 X n') 40₁,₁-40₁,ₙ of the aforementioned 'm X n' product vector matrix 40 is obtained. The step 550 can be performed by providing the '1 X d-k' intermediate vector 75 and the 'd-k X n' second test matrix 66 to the second multiplication module 80 for the purpose of multiplication of the '1 X d-k' intermediate vector 75 and the 'd-k X n' second test matrix 66.

It may be noted herein that subsequent rows 40_{2,1}-40_{2,n} to 40_{m,1}-40_{m,n} of the 'm X n' product vector matrix 40 can be obtained by sequential repetition of the steps 540 and 550 for each of the subsequent template signal vectors 20₂-20ₘ. Herein, different template signal vectors 20₂-20ₘ are provided to the first multiplication module 70, wherein the 'd X d-k' first test matrix 64 remains the same. Therewith, respective subsequent '1 X d-k' intermediate vectors 75 are obtained, which are thereafter provided to the second multiplication module 80 for the purpose of determination of the respective subsequent rows 40_{2,1}-40_{2,n} to 40_{m,1}-40_{m,n} of the 'm X n' product vector matrix 40. Furthermore, in the second multiplication module 80, the 'd-k X n' second test matrix 66 remains the same.

Thereafter, in step 560, the 'm X n' product vector matrix 40 obtained therewith is stored in the memory unit 50. The 'm X n' product vector matrix 40 can be provided to the processing unit 15 at a subsequent stage for the purpose of processing the same in the context of a signal processing application, such as Dynamic Time Warping, Data Compression, Data Indexing, et cetera.

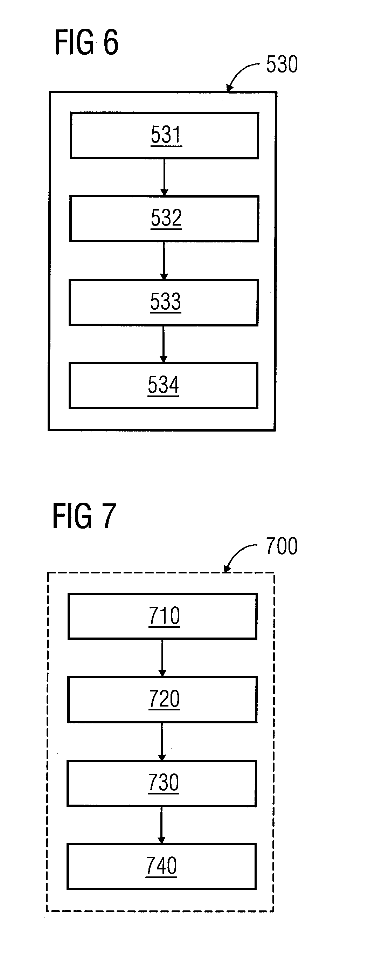

Certain steps comprised in the step 530, which is related to the factorization of the 'd X n' test signal matrix 30, in accordance with an alternate embodiment are depicted in FIG 6.

In step 531, the 'p X d' random signal matrix 90 and the 'd X n' test signal matrix 30 are multiplied, wherewith the aforementioned 'p X n' quasi product matrix 110 is obtained. The step 531 can be performed by providing the 'p X d' random signal matrix 90 and the 'd X n' test signal matrix 30 to the third multiplication module 100 for the purpose of multiplication of the 'p X d' random signal matrix 90 and the 'd X n' test signal matrix 30.

Thereafter, in step 532, 'p X n' quasi product matrix 110 is low-rank factorized into the 'p X p-k' first quasi matrix 114 and the 'p-k X n' second quasi matrix 116. The step 532 can be performed by providing 'p X n' quasi product matrix 110 to the factorization module 60, and the low-rank factors of the same can be obtained by performing Singular Value Decomposition on the 'p X n' quasi product matrix 110.

In step 533, 'd X p' inverse matrix 125 and the 'p X p-k' first quasi matrix 114 are multiplied, wherewith the 'd X p-k' first intermediate quasi matrix 134 is obtained.
Herein, the step 533 can be performed by providing the 'd X p' inverse matrix 125 and the 'p X p-k' first quasi matrix 114 to the fourth multiplication module 130 for the purpose of multiplication of the 'd X p' inverse matrix 125 and the 'p X p-k' first quasi matrix 114.

The 'd X p' inverse matrix 125 can be obtained by providing the 'p X d' random signal matrix 90 to the inversion module 120 for the purpose of determination of the inverse of the 'p X d' random signal matrix 90.

In step 534, the 'p X p-k' first quasi matrix 114 and the 'p-k X n' second quasi matrix 116 obtained therewith are stored in the memory unit 50. The 'p X p-k' first quasi matrix 114 and the 'p-k X n' second quasi matrix 116 can be provided to the processing unit 115 at another subsequent stage for the purpose of processing the same for the determination of the 'm X n' product vector matrix 40.

The 'm X n' product vector matrix 40 obtained in accordance with the aforementioned steps can be used for the purpose of performing Dynamic Time Warping of the plurality of test signals 30₁-30ₙ and the plurality of template signals 20₁-20ₘ.

A flowchart 700 of a method for performing Dynamic Time Warping of the test signals 30₁-30ₙ and the template signals 20₁-20ₘ is depicted in FIG 7.

In step 710, the 'm X n' product vector 40 is received. In accordance with one aspect, the 'm X n' product vector 40 is stored in the memory unit 50, and the memory unit 50 can thereafter be queried by the processing unit 15 to receive , 'm X n' product vector 40.

In step 720, the test signal vector ('d X n' test signal matrix 30) 30₁-30ₙ and the template signal vector ('m X d' template signal matrix 20) 20₁-20ₘ are received respectively. Herein, the memory unit 50 can be queried by the processing unit 15 to receive the 'm X d' template signal matrix 20 and 'd X n' test signal matrix 30.

Thereafter, in step 730, the 'm X n' Euclidean Distance Matrix is determined. The step 730 can be performed by providing the 'm X n' product vector matrix 40, the 'm X d' template signal matrix 20, and the 'd X n' test signal matrix 30 to the aforementioned Euclidean Distance Matrix Computation module 140 for the purpose of determination of the 'm X n' Euclidean Distance Matrix.

In a subsequent step 740, the Dynamic Time Warping Score is determined. Herein, the step 740 can be performed by providing the 'm X n' Euclidean Distance Matrix to the aforementioned Dynamic Time Warping Score computation module 160. Herewith, the 'm X n' Global Distance Matrix is determined, wherewith the Dynamic Time Warping Score for the plurality of test signals 30₁-30ₙ and the plurality of template signals 20₁-20ₘ is obtained.

Herein, in accordance with an aspect of the present invention, the aforementioned plurality of test signal vectors 30 can also be a concatenation of a plurality of groups of test signal vectors. Herein, each group of test signal vectors comprises those test signal vectors that belong to a certain signal class. In such a scenario, the aforementioned 'm X n' product vector matrix 40 can be determined on a per-class basis, i.e. corresponding product vector can be determined for the plurality of template signal vectors 20 and an individual group of test signal vectors. Herein, for facilitating the determination of the product vector on a per-class basis, for each group comprising test signal vectors, respective low-rank factors are determined, and the plurality of template signals 20 is multiplied with the respective low-rank factors corresponding to that particular group of test signal vectors in accordance with the aforementioned teachings of the present invention, in order to obtain the corresponding product vector.

The aforementioned per-class based technique is beneficial for performing Dynamic Time Warping based classification of the plurality of test signals 30, if multiple classes of test signal vectors are present. Herein, individual product vectors can be determined on a per-class basis, for the purpose of determination of the corresponding Euclidean Distance Matrices. The corresponding Euclidean Distance Matrices are thereafter utilised for obtaining Dynamic Time Warping scores on a per-class basis, therewith increasing the speed and reliability of the aforementioned Dynamic Time Warping Block 150. Furthermore, in the per-class based implementation of the Dynamic Time Warping Block 150, multiple processing units can be utilised, wherein each processing unit can be configured to determine a certain product vector for a certain class of test signal vectors 20, the corresponding Euclidean Distance Matrix and the corresponding Dynamic Time Warping Score. Furthermore, the multiple processing units of the Dynamic Time Warping Block 150 can be configured to operate in parallel, wherewith the speed of Dynamic Time Warping Block is further enhanced.

Though the invention has been described herein with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A method for determining a product vector (40_{1,1}-40_{m,n}) for determining a Euclidean distance between a test signal vector (30₁-30ₙ) and at least a template signal vector (20₁-20ₘ), wherein the test signal vector (30₁-30ₙ) comprises vectorized values of at least a portion of a test signal, and wherein template signal vector (20₁-20ₘ) comprises vectorized values of a template signal,
the method comprising:
- a step (530) of factorizing the test signal vector (30₁-30ₙ) for obtaining at least a first test signal factorized vector (64) and a second test signal factorized vector (66) of the test signal vector (30₁-30ₙ), wherein respective ranks of the first test signal factorized vector (64) and the second test signal factorized vector (66) are both less than a rank of the test signal vector (30₁-30ₙ),
- a step (540) of multiplying the template signal vector (20₁-20ₘ) and the first test signal factorized vector (64) for obtaining an intermediate template signal vector (75), wherein a rank of the intermediate template signal vector (75) is less than or equal to a rank of the template signal vector (20₁-20ₘ), and
- a step (550) of multiplying the intermediate template signal vector (75) and the second test signal factorized vector (66) for determining the product vector (40_{1,1}-40_{m,n}).

2. The method according to claim 1, wherein a product of the first test signal factorized vector (64) and the second test signal factorized vector (66) is at least an approximation of the test signal vector (30₁-30ₙ).

3. The method according to claim 1 or claim 2, wherein the first test signal factorized vector (64) and the second test signal factorized vector (66) are obtained by performing Singular Value Decomposition of the test signal vector (30₁-30ₙ).

4. The method according to claim 1 or claim 2, wherein in the step (530) of factorizing the test signal vector (30₁-30ₙ), the obtainment of the first test signal factorized vector (64) comprises:
- a step (531) of multiplying a random signal (90) with the test signal vector (30₁-30ₙ) for obtaining a quasi product vector (110), wherein the random signal (90) comprises a plurality of random signal vectors, wherein each random signal vector of the plurality of the random signal vectors comprises a plurality of random values,
- a step (532) of factorizing the quasi product vector (110) for obtaining a first quasi product factorized vector (114) and a second quasi product factorized vector (116) for the quasi product vector (110), wherein respective ranks of the first quasi product factorized vector (114) and the second quasi product factorized vector (116) are both less than a rank of the quasi product vector (110), and
- a step (532) of multiplying the first quasi product factorized vector (114) with an inverse random signal (125) for obtaining the first test signal factorized vector (64), wherein the inverse random signal (125) is an inverse of the random signal (90).

5. The method according to claim 4, wherein the second quasi product factorized vector (116) is the second test signal factorized vector (66) and/or wherein the first quasi product factorized vector (114) and the second quasi product factorized vector (116) are obtained by performing Singular Value Decomposition of the quasi product factorized vector (110).

6. A method for performing Dynamic Time Warping between a test signal vector (30₁-30ₙ) and at least a template signal vector (20₁-20ₘ), wherein the test signal vector (30₁-30ₙ) comprises vectorized values of at least a portion of a test signal, and wherein template signal vector (20₁-20ₘ) comprises vectorized values of a template signal,
the method comprising:
- a step (510-550) of determining a product vector (40_{1,1}-40_{m,n}) of the test signal vector (30₁-30ₙ) and the template signal vector (20₁-20ₘ), wherein the product vector (40_{1,1}-40_{m,n}) is determined according to any of the claims 1 to 6,
- a step (730) of processing the product vector (40_{1,1}-40_{m,n}) for determining a Euclidean distance between the test signal vector (30₁-30ₙ) and the template signal vector (20₁-20ₘ),
- a step (740) of processing the Euclidean distance for determining a global distance between the test signal vector (30₁-30ₙ) and the template signal vector (20₁-20ₘ), wherein the global distance represents a Dynamic Time Warping Score for the test signal vector (30₁-30ₙ) and the template signal vector (20₁-20ₘ), and wherein the Dynamic Time Warping Score represents a similarity between the test signal vector (30₁-30ₙ) and the template signal vector (20₁-20ₘ).

7. A system (10) for performing the method according to any of the claims 1 to 5 for determining the product vector (40_{1,1}-40_{m,n}) from the test signal vector (30₁-30ₙ) and the template signal vector (20₁-20ₘ),
the system (10) comprising:
- a factorization module (60) for factorizing the test signal vector (30₁-30ₙ) for obtaining the first test signal factorized vector (64) and the second test signal factorized vector (66) for the test signal vector (30₁-30ₙ),
- a first multiplication module (70) for multiplying the template signal vector (20₁-20ₘ) and the first test signal factorized vector (64) for obtaining the intermediate template signal vector (75), wherein the first multiplication module (70) is operably coupled to the factorization module (60) for receiving the first test signal factorized vector (64), and
- a second multiplication module (80) for multiplying the second test signal factorized vector (66) and the intermediate template signal vector (75) for obtaining the product vector (40_{1,1}-40_{m,n}), wherein the second multiplication module (80) is operably coupled to the first multiplication module (70) for receiving the intermediate template signal vector (75).

8. The system (10) according to claim 7, wherein the factorization module (60) is configured to factorize the test signal vector (30₁-30ₙ), such that the product of the first test signal factorized vector (64) and the second test signal factorized vector (66) is at least an approximation of the test signal vector (30₁-30ₙ).

9. The system (10) according to claim 7 or claim 8, wherein the factorization module (60) is configured to factorize the test signal vector (30₁-30ₙ) by performing Singular Value Decomposition of the test signal vector (30₁-30ₙ) for obtaining the first test signal factorized vector (64) and the second test signal factorized vector (66).

10. The system (10) according to claim 9, further comprising a third multiplication module (100) for multiplying the random signal (90) and the test signal vector (30₁-30ₙ) for obtaining the quasi product vector (110).

11. The system (10) according to claim 10, wherein the factorization module (60) is further configured to factorize the quasi product vector (110) for obtaining the first quasi product factorized vector (114) and the second quasi product factorized vector (116) from the quasi product vector (110), wherein the second quasi product factorized vector (116) is the second test signal factorized vector (66).

12. The system (10) according to claim 11, further comprising a fourth multiplication module (130) for multiplying the inverse random signal (125) and the first quasi product factorized vector (114) for obtaining the first test signal factorized vector (64).

13. The system (10) according to claim 12, wherein the second multiplication module (80) is further configured to multiply the first test signal factorized vector (64) and the second quasi product factorized vector (116) for obtaining the product vector (40_{1,1}-40_{m,n}).

14. The system (10) according to any of the claims 7 to 13, further comprising a memory unit (50) for storing at least one of the template signal vector (20₁-20ₘ), the test signal vector (30₁-30ₙ), the product vector (40_{1,1}-40_{m,n}), the first test signal factorized vector (64), and the second test signal factorized vector (66).

15. A Dynamic Time Warping Block (150) for performing Dynamic Time Warping of a test signal vector (30₁-30ₙ) and at least a template signal vector (20₁-20ₘ), wherein the test signal vector (30₁-30ₙ) comprises vectorized values of at least a portion of a test signal, and wherein template signal vector (20₁-20ₘ) comprises vectorized values of a template signal,
the Dynamic Time Warping Block (150) comprising:
- the system (10) according to any of the claims 7 to 14 for determining a product vector (40_{1,1}-40_{m,n}) of the test signal vector (30₁-30ₙ) and the template signal vector (20₁-20ₘ),
- a Euclidean Distance Matrix Computation module (140) configured to process the test signal vector (30₁-30ₙ), the template signal vector (20₁-20ₙ) and the product vector (40_{1,1}-40_{m,n}) for determining a Euclidean Distance between the test signal vector (30₁-30ₙ) and the template signal vector (20₁-20ₘ) based on the product vector (40_{1,1}-40_{m,n}),
and
- a Dynamic Time Warping Score computation module (160) for processing the Euclidean Distance for determining a global distance between the test signal vector (30₁-30ₙ) and the template signal vector (20₁-20ₘ), wherein the global distance represents a Dynamic Time Warping Score for the test signal vector (30₁-30ₙ) and the template signal vector (20₁-20ₘ), and wherein the Dynamic Time Warping Score represents a similarity between the test signal vector (30₁-30ₙ) and the template signal vector (20₁-20ₘ).
